# EUROPÄISCHE PATENTANMELDUNG

(11) **EP 0 865 817 A1**
(43) Veröffentlichungstag der Anmeldung: **23.09.1998**
(21) Anmeldenummer: 98104827.5
(22) Anmeldetag: 17.03.1998
(51) Int. Cl.: B01F 15/00, B01J 19/00, B01J 19/18

(54) **Rührer mit variabel einstellbaren Rührorganen für Reaktoren für chemische Umsetzungen**

(30) Priorität: 17.03.1997 DE 19711019
(71) Anmelder: BASF AKTIENGESELLSCHAFT, 67056 Ludwigshafen (DE)
(72) Erfinder: Rupaner, Robert, Dr., 67158 Ellerstadt (DE); Lawrenz, Sven, 68161 Mannheim (DE); Schuchmann, Heike, Dr., 71665 Vaihingen (DE); Bauer, Gerhard, Dr., 69469 Weinheim (DE)
(74) Vertreter: Kinzebach, Werner, Dr.

(57) **Zusammenfassung**

Die Erfindung betrifft einen Rührer mit variabel einstellbaren Rührorganen (5a-d) für Reaktoren für chemische Umsetzungen, insbesondere für Polymerisationsreaktoren. Der Rührer weist eine Antriebswelle (2) auf, in der Stellmittel (6) zur Verstellung der Rührorgane (5a-d) vorhanden sind. Jedes Rührorgan ist mit der Antriebswelle (9) über einen Arm verbunden und über die Stellmittel (6) drehbar.

Der erfindungsgemäße Rührer ist insbesondere für die Herstellung von Emulsions-, Suspensions-, Lösungs-, Substanz- oder Fällungspolymerisaten geeignet.

## Beschreibung

Die Erfindung betrifft einen Rührer für Reaktoren für chemische Umsetzungen, insbesondere einen Rührer für Polymerisationsreaktoren, der an einer Antriebswelle mehrere variabel einstellbare Rührorgane aufweist.

Zur Herstellung von Polymerisaten, insbesondere von Polymerdispersionen, haben sich verschiedenartige Rührorgane bewährt - im wesentlichen Anker-, Blatt-, oder Pfaudler-Rührer -, die jeweils spezielle Eigenschaften hinsichtlich Scherbelastung, Wandgängigkeit und damit Wärmeabfuhr, Mischzeit oder Homogenisierungseigenschaften aufweisen. In Reaktoren, in denen eine Vielzahl unterschiedlicher Produkte hergestellt werden, die sich insbesondere hinsichtlich der Viskosität unterscheiden, wäre es wünschenswert, über einen Rührer zu verfügen, der an das jeweilige Rührproblem anpaßbar wäre. Ein Beispiel hierfür wäre ein Rührer, der während des Rührvorgangs bezüglich Geometrie, Charakteristik und Leistungsaufnahme in kontrollierter Weise veränderbar ist.

Zum Stand der Technik werden die am Ende der Beschreibung zitierten Veröffentlichungen genannt ([1] bis [6]).

Die Autoren der Veröffentlichung [1] beschreiben einen Rührer mit verstellbaren Rührblättern, der insbesondere für solche Rührvorgänge geeignet ist, während denen sich die Viskosität ändert (s. [1], Seite 48, mittlere Spalte, vorletzter Absatz). Das Hauptanwendungsgebiet des dort beschriebenen "Variostant"-Rührers sind Biotechnologie-Reaktoren, und er wird dabei vor allem zum Aufwirbeln von Schlammassen herangezogen. In der zur Veröffentlichung [1] gehörenden Firmenbroschüre [2] wird als Anwendungsgebiet für den Variostant-Rührer im Abschnitt "Einsatzbereiche" auch die Herstellung von Kunststoffen erwähnt. Die Rührblätter sitzen am unteren Ende einer hohlen Antriebswelle. Die Einstelung des Anstellwinkels der Rührblätter erfolgt über eine Steuerwelle, die in der hohlen Antriebswelle verläuft. Das untere Ende der Steuerwelle ragt aus der Antriebswelle heraus in das Rührgut und ist mit Betätigungsorganen versehen, über die die Einstellung des Anstellwinkels der Rührblätter bewirkt wird. Dieser aus [1] und [2] bekannte Rührer weist auf Grund seiner Konstruktion verschiedene Nachteile auf, unter anderen die folgenden:

Die hohle Antriebswelle hat Kraft bzw. Drehmoment zu übertragen, um die Rührerblätter durch das zu rührende Medium zu drücken. Die Steuerwelle hat Zugkraft zu übertragen, um den Neigungswinkel der Rührerblätter einzustellen und zu halten. Die bekannte Konstruktion bedingt, daß die hohle Antriebswelle bzw. das Steuergestänge nur geringe Kräfte übertragen kann.

Polymerisate können zwischen der Hohlwelle und der sich darin bewegenden Steuerwelle eindringen und die beiden miteinander verkleben.

Die Gestänge bzw. Steuerungsteile, welche die Verstellung der Rührerblätter besorgen, kommen zwangsläufig mit dem gerührten Medium in Berührung und verschmutzen daher leicht. Sie sind einer Reinigung nicht zugänglich und können bei höheren Rührgutviskositäten verbiegen oder abreißen.

Besonders bei der Bearbeitung von scherempfindlichen Dispersionen führt das herausragende Gestänge an den Stellen mit hoher Scherung zur Koagulatbildung, welche die gesamte bewegliche Mechanik beeinflußt.

Der Erfindung liegt daher die Aufgabe zugrunde, den geschilderten Nachteilen der bekannten, mit variabel einstellbaren Rührorganen ausgestatteten Rührer abzuhelfen und einen Rührer für Polymerisationsreaktoren bereitzustellen, der ohne die Nachteile des Standes der Technik arbeitet und insbesondere für die Herstellung von Polymerdisperionen geeignet ist.

Gegenstand der Erfindung ist demgemäß ein Rührer für Reaktoren für chemische Umsetzungen, der an einer Antriebswelle mehrere variabel einstellbare Rührorgane aufweist und dadurch gekennzeichnet ist, daß jedes Rührorgan mit der Antriebswelle über einen Arm verbunden und über in der Antriebswelle angeordnete Stellmittel einstellbar ist.

Die Rührorgane können z. B. als Rührblätter oder -schaufeln auslaufen. Zu bevorzugen sind aber Rührblätter, und zwar solche mit im wesentlichen rechteckiger Ausbildung. Die Blätter sind vorteilhafterweise an den Kanten bzw. Ecken etwas abgerundet, weil dadurch Stellen höchster Scherung vermieden werden; oder die Blätter sind geschlitzt, wie es z. B. in der Figur 3 gezeigt ist, um die maximale Scherung herabzusetzen. Ein rechteckiges Rührblatt kann ggfs. seinerseits aus mehreren in verschiedenen Winkeln zur Rührerwelle geneigten, jedoch feststehenden Blättern bestehen, wie es in der Figur 4 gezeigt ist. Die Blätter können auch gekrümmt, gewölbt (s. Figur 5) oder löffelförmig ausgebildet sein. Dies vermindert zusätzlich die maximal auftretende Scherung des Rührgutes.

Die Rührorgane bestehen vorzugsweise aus Stahl oder sind emailliert.

Die Betätigung der Stellmittel kann auf verschiedene Weise erfolgen, beispielsweise durch eine in der als Hohlwelle ausgebildeten Antriebswelle verlaufende Steuerwelle. Die Stellmittel können auch mit einem Elektromotor, z. B. einem Schritt- oder Gleichstrommotor, betrieben werden. Der Motor kannn auch über Funk angesteuert werden.

Durch Arretierung der Stellmittel werden die gewählten Neigungswinkel der Rührorgane festgelegt.

Die Stellmittel sind vorzugsweise gekapselt.

Bei den Stellmitteln handelt es sich vorzugsweise um ein Getriebe. Als Getriebe kommen insbesondere Zahnradgetriebe in Betracht, welche eine Drehbewegung an die Arme und somit an die Rührorgane weitergeben und die Neigungswinkel der Rührorgane, beispielsweise der Rührblätter, in gewünschter Weise verändern.

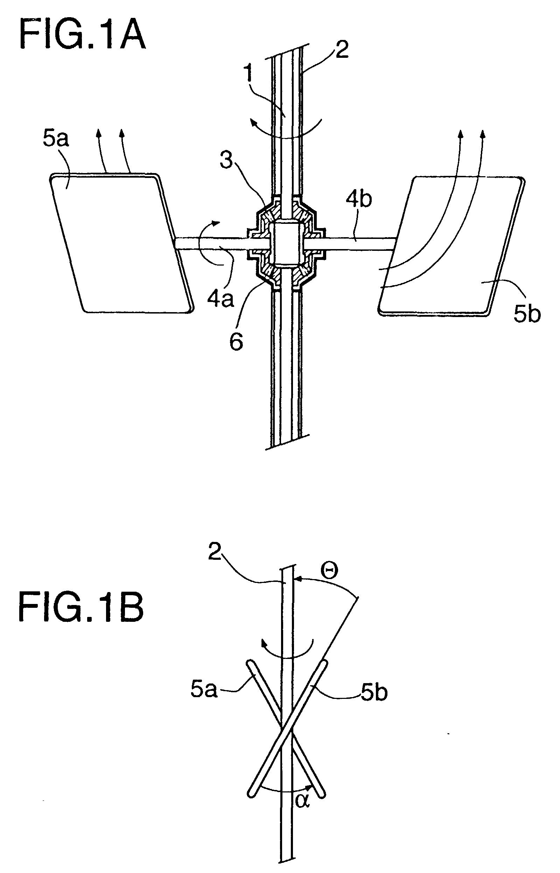

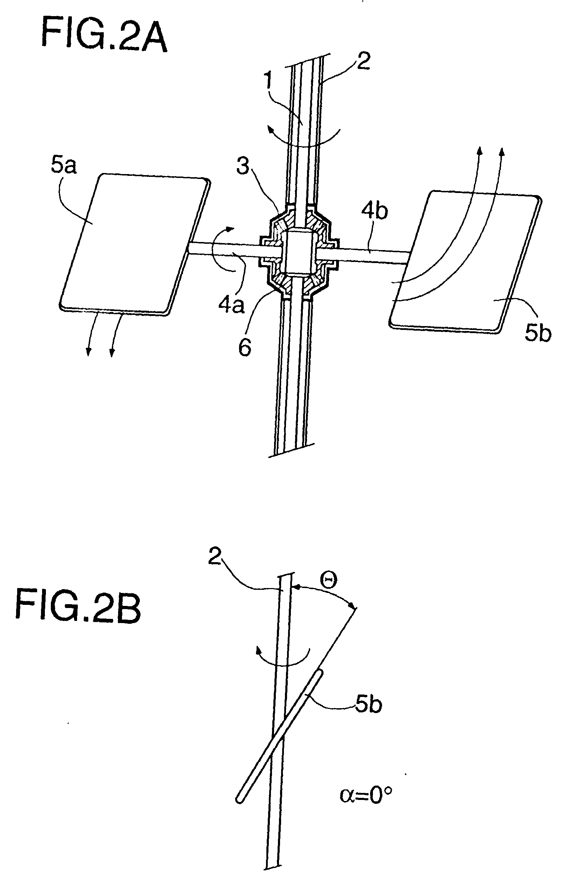

Die Stellung der beiden gegenüberliegenden Rührorgane, z. B. Rührblätter, kann gleichsinnig sein (Winkel α, den die Rührblätter zueinander bilden = 2 x θ). In dieser Stellung wird Flüssigkeit von beiden Blättern nach "oben" weggedrückt, wie aus Figur 1 ersichtlich ist. Die Stellung der Rührorgane kann aber auch gegensinnig sein (Winkel α = 0). In diesem Falle wird das eine Rührblatt Flüssigkeit nach oben und das andere Flüssigkeit nach unten drücken, wie aus Figur 2 ersichtlich ist. Dies hat zur Folge, daß die resultierenden Drehmomente an den querliegenden Armen sich aufheben.

Vorzugsweise werden die Rührorgane paarweise verstellt, da dies eine Vereinfachung der Konstruktion mit sich bringt und unberechenbare Taumelbewegungen des Rührwerks auf ein Mindestmaß begrenzt werden. Bei einer bevorzugten Ausführungsform ist dazu ein durch zwei gegenüberliegende, koaxiale Arme gebildetes Armpaar einstückig ausgebildet.

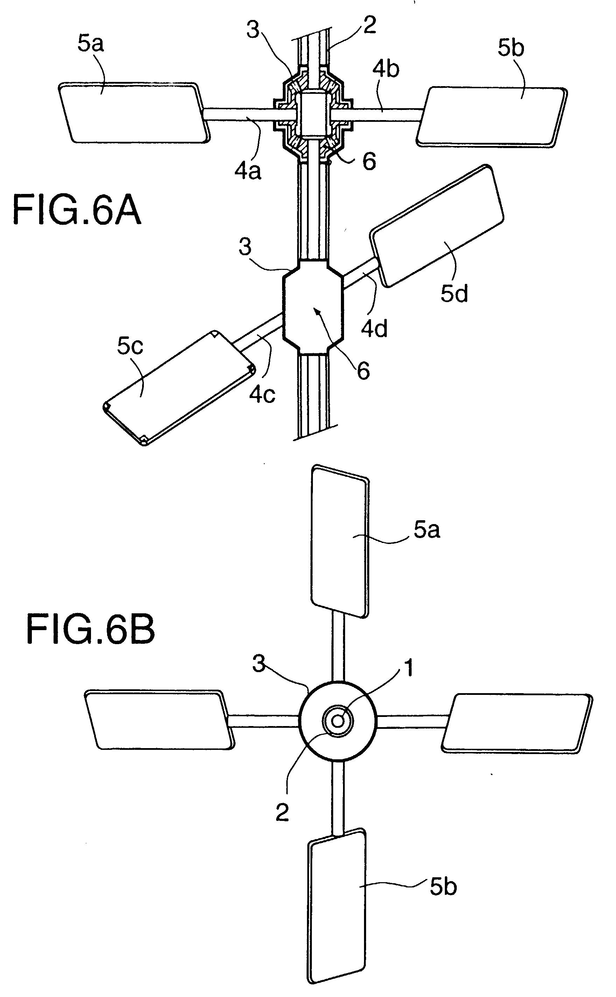

Der, vorzugsweise wandgängige, erfindungsgemäße Rührer kann auch mehrstufig aufgebaut sein, d. h. es sind mehrere Armpaare an der Antriebswelle etagenweise angeordnet. Der Winkel β, den die Armpaare, von oben betrachtet, miteinander bilden, liegt vorzugsweise zwischen 0 und 90° (s. Fig. 6). Es können je nach Länge des Rührers bis zu 8 Armpaare, vorzugsweise 2 bis 4 Armpaare, vorgesehen sein, die gleichmäßig miteinander oder gegeneinander verstellt werden können. Auch kann, z. B. mit Hilfe einer elektromotorischen Steuerung, für jedes Armpaar ein individueller Neigungswinkel θ eingestellt werden. Bevorzugt wird ein einstufiger Rührer verwendet.

Als Dichtungen für die Kapselung der Arme gegenüber der axialen Antriebswelle werden Gleitringdichtungen oder auch andere übliche Dichtungen (siehe z. B. A. Kläß et al., "Rührwerks-Gleitringdichtungen für den Einsatz in der chemischen Industrie", in Handbuch Dichtungen, 1. Aufl. 1990, Herausgeber B. Thier, W.H. Faragallah (Verlag), Sulzbach) verwendet, deren Material inert gegenüber dem Rührgut ist.

Die Gleitringdichtung kann mit Produkt oder einer in dem Reaktor enthaltenen Komponente (z. B. Wasser) geschmiert bzw. abgedichtet werden, wodurch errreicht wird, daß kein produktfremdes Gleitmittel in das Endprodukt gelangt.

Zu den Vorteilen, die durch die vorliegende Erfindung erzielt werden, gehören die folgenden:

Da die Steuerungsteile, wie Steuerwelle und Getriebe, in der hohlen Antriebswelle eingekapselt sind, kommen im Gegensatz zu den bekannten Rührern mit variabel verstellbaren Rührorganen keine Steuerungsteile bzw. Gestänge mit dem zu rührenden Medium in Berührung, so daß die Verschmutzungsgefahr, die Gefahr der Koagulatbildung und die Gefahr von Beschädigungen infolge Abreißens und Verbiegens von Teilen des Rührwerks bei höheren Rührgutviskositäten verringert sind.

Auch können wegen der Abdichtung und Verkapselung der Stellmitttel keine Polymerisate in das Innere der Antriebswelle eindringen und zu Verklebungen führen.

Während der Polymerisation ändert sich die Viskosität des Rührgutes stetig. Durch Variation der Drehzahl und des Neigungswinkels der Rührorgane kann nun eine optimale Turbulenz des Rührgutes eingestellt werden. Demzufolge lassen sich je nach Anforderungen und gestellter Rühraufgabe der Einrühr- bzw. Homogenisierungseffekt in der Absicht, die Mischzeit zu minimieren, verstärken und/oder die Wärmeabfuhrleistung verbessern.

Der erfindungsgemäße Rührer kann mit Vorteil auch dann in einem Rührbehälter genutzt werden, wenn die zu rührenden Stoffe unter sich unterschiedliche Viskositäten aufweisen, die sich aber im Verlaufe des Rührprozesses nicht ändern. Hierbei ist es möglich, Drehzahl und Neigungswinkel so auszurichten, daß ein optimaler Leistungseintrag des Rührers erfolgt.

Es ist möglich, den Neigungswinkel θ als Funktion einer Zeitkoordinate, wie Reaktionsfortschritt, Dosierzeit einer Komponente, Viskositätsänderung, pH-Änderung, Farbänderung oder allgemein in Abhängigkeit eines Signals eines dem Reaktionsmedium angeschlossenen Sensors, linear oder kontinuierlich oder auch statistisch, d. h. unregelmäßig und zufallsgesteuert, zu verändern. Letzteres führt dann durch Umstellen des Neigungswinkels zur Ausbildung von Perioden höchster Turbulenz im System.

Der erfindungsgemäße Rührer für Polymerisationsreaktoren wird vorzugsweise dort verwendet, wo Dispersionspolymerisate oder auch Suspensions-, Lösungs, Substanz- oder Fällungspolymerisate hergestellt werden. Er ist insbesondere für die Suspensions- oder Emusionspolymerisation brauchbar.

Die Polymerdispersionen können mono- oder polymodal sein und breite oder enge Teilchengrößenverteilung besitzen.

Die Glastemperatur der erhaltenen Polymere liegt im allgemeinen im Bereich von -100 Grad C bis +150 Grad C.

Für die Polymerdispersionsherstellung geeignete ethylenisch ungesättigte Monomere sind insbesondere C₂-C₆-Olefine, wie Ethylen und Propylen, vinylaromatische Verbindungen, wie Styrol, α-Methylstyrol oder Vinyltoluole, C₁-C₁₂- Alkylvinylether, wie Methyl- oder Ethylvinylether, Vinylester von C₁-C₁₈- Mono-carbonsäuren, wie Vinylacetat oder Vinylpropionat, Ester von α, β-ethylenisch ungesättigten Mono- und Dicarbonsäuren, wie Acryl-, Methacryl- oder Maleinsäure, mit C₁-C₁₂ - Alkanolen, wie Methanol, Ethanol, n - Propanol, iso-Propanol, 1-Butanol, 2-Butanol, iso-Butanol, tert. -Butanol und 2-Ethylhexanol, Acrylnitril, Methacrylnitril, Butadien, Isopren, α, β-ethylenisch ungesättigte C₃-C₆-Mono- und Dicarbonsäuren, wie Acrylsäure und Methacrylsäure und deren Amide, wie Acrylamid und Methacrylamid.

Dispersionen, die mit dem erfindungsgemäßen Rührer hergestellt werden können, sind beispielsweise Styrol-Butadien-Dispersionen, Styrol-Acrylat-Dispersionen oder Acrylat-Dispersionen. Hier beispielsweise in Frage kommende, dispergierte Polymerisate sind Homo- oder Copolymerisate der Acrylsäure- und Methacrylsäureester, inbesondere von Methyl-, Ethyl-, Butyl-, Ethylhexylacrylat, Hydroxyethyl- und Hydroxypropylacrylsäureester und -methacrylsäureester; Homo- oder Copolymerisate des Styrols mit Butadien und/oder (Meth)acrylnitril und/oder den erwähnten (Meth)acrylsäureestern; Homo- oder Copolymerisate des Vinylacetates und/oder Vinylpropionates mit Ethylen, Butadien oder den erwähnten (Meth)acrylsäureestern; Homo- oder Copolymerisate des Vinylchlorids und/oder Vinylidenchlorids mit den erwähnten (Meth)acrylsäureestern, Olefinen oder Vinylaromaten. In Betracht kommen auch Masse- oder Lösungspolymerisate der Acrylsäure oder Methacrylsäure, ggf. mit anderen Säuren, Säureamiden oder Säureanhydriden wie Maleinsäure(anhydrid), (Meth)acrylamid.

Die Polymerisationstemperatur beträgt üblicherweise 30 bis 150 °C. Die Polymerisation kann auch unter Druck erfolgen. Zur Einleitung der Emulsionspolymerisation werden die gebräuchlichen wasserlöslichen Radikalbildner in einer Menge von vorzugsweise 0,01 bis 0,1 Gew.-%, bezogen auf die Monomerphase, eingesetzt. Beispiele für Radikalbildner sind Peroxide, wie Ammoniumperoxodisulfat, Kaliumperoxodisulfat und Wasserstoffperoxid. Die Initiierung kann entweder direkt durch Temperaturerhöhung oder durch Einsatz von Reduktionsmitteln erfolgen.

Als Dispergiermittel können die bei der Emulsionspolymerisation gebräuchlichen ionischen und nichtionischen Emulgatoren oder Schutzkolloide eingesetzt werden. Vorzugsweise werden 0,1 bis 5,0 Gew.-% Emulgator, bezogen auf die Monomerphase, eingesetzt. Gegebenenfalls können zur Polymerisation noch Puffersubstanzen, wie Natriumcarbonat, Natriumhydrogenphosphat oder Alkaliacetate, eingesetzt werden.

Die Polymerisation kann kontinuierlich oder diskontinuierlich, mit oder ohne Verwendung von Saatlatices, unter Vorlage aller oder einzelner Bestandteile des Reaktionsgemisches oder unter teilweiser Vorlage und Zulauf der oder einzelner Bestandteile des Reaktionsgemisches oder nach einem Anlaufverfahren ohne Vorlage durchgeführt werden.

Nähere Angaben zur Polymerisation ethylenisch ungesättigter Verbindungen finden sich beispielsweise in Houben-Weyl, Band XIV/1, Makromolekulare Stoffe, Georg Thieme Verlag, Stuttgart, 1961.

Als Polykondensation ist insbesondere die Herstellung von Polyestern, Polyamiden und Kondensationsharzen und als Polyaddition insbesondere die Polyurethanbildung zu erwähnen. Nähere Angaben hierzu finden sich ebenfalls in dem zuvor genannten Buch. Die Erfindung wird nachfolgend an Hand von Beispielen weiter erläutert.

Es zeigen:
- Fig. 1a: eine perspektivische Ansicht (mit Teilschnitt) eines erfindungsgemäßen Rührers mit zwei Rührblättern

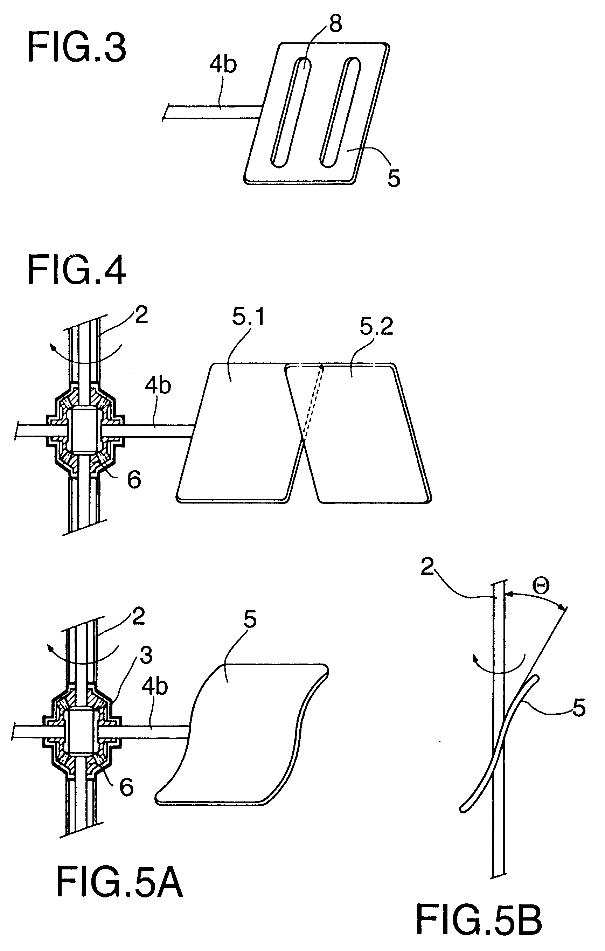

- Fig. 1b: eine Seitenansicht des Rührers gemäß Fig. 1a und 4 in Richtung der Achse der Arme, an denen die Rührblätter sitzen
- Fig. 2a: eine perspektivische Ansicht (Teilschnitt) einer weiteren Ausführungsform des erfindungsgemäßen Rührers mit zwei Rührblättern
- Fig. 2b: eine Seitenansicht des Rührers gemäß Fig. 2a in Richtung der Achse der Arme, an denen die Rührblätter sitzen
- Fig. 3, 4 und 5a: perspektivische Ansichten weiterer Ausführungsformen von Rührblättern
- Fig. 5b: eine Seitenansicht des Rührers gemäß Fig. 5a in Richtung der Achse der Arme, an denen die Rührblätter sitzen.
- Fig. 6a: eine perspektivische Ansicht (Teilschnitt) eines zweistufigen erfindungsgemäßen Rührers
- Fig. 6b: eine Ansicht des Rührers gemäß 6a in Richtung der Rührwelle.

Der Rührer gemäß Fig. 1 besteht aus einer Antriebshohlwelle 2, in welcher eine arretierbare Steuerwelle 1 geführt ist. Mit der Steuerwelle 1 sind zwei senkrecht zur Steuerwelle 1 verlaufende Arme 4a und 4b über ein Zahnradgetriebe 6 verbunden. Im Bereich des Durchtritts der Arme 4a und 4b durch die Hohlwelle 2 ist eine Kapselung 3 vorgesehen. An den Enden der Arme 4a und 4b sind rechteckige Rührblätter 5a und 5b mit gerundeten Ecken vorhanden. Die Rührblätter 5a und 5b bilden mit der Antriebshohlwelle 2 einen Winkel Θ, wobei die Rührblätter gegeneinander um einen Winkel α verdreht sind, siehe Fig. 1b. Bei dieser Anordnung und bei dem in Fig. 1a durch den Vollpfeil angedeuteten Drehrichtung der Antriebshohlwelle 2 wird das Rührgut in der durch die langen Pfeile in Fig. 1a angedeuteten Richtung bewegt.

In Fig 2a ist ein Rührer der in Fig. 1a gezeigten Art abgebildet, wobei jedoch die Rührblätter durch Drehung der Arme 4a bzw. 4b um ihre Längsachsen in eine andere Position fixiert sind, derart, daß die Rührblätter 5a und 5b mit der Antriebshohlwelle 2 zwar einen Winkel Θ bilden, aber gegeneinander nicht verdreht sind, d. h. der Winkel α ist 0 °. Bei dieser Anordnung und gleichem Drehsinn der Antriebshohlwelle 2 wie in Fig. 1a, wird das Rührgut in der durch die langen Pfeile angedeuteten Richtung bewegt.

In Fig. 3 ist ein Rührblatt 5 mit zwei senkrecht zum Arm 4b verlaufenden Schlitzen 8 gezeigt.

Fig. 4 zeigt eine Ausführungsform mit zwei Rührblättern 5.1 und 5.2 an einem Arm 4. Sie sind so gegeneinander geneigt, daß sie beide mit der Hohlwelle einen Winkel Θ und untereinander einen Winkel α bilden, siehe Fig. 1b.

Eine weitere Ausführungsform eines Rührblattes 5 ist in Fig. 5a und 5b gezeigt. Es ist nach Art eines S gekrümmt.

Die Fig. 6a zeigt einen zweistufigen Rührer mit rechteckigen Rührblättern 5a, b. Die Arme 4a, b bzw. 4c, d sind jedoch um einen Winkel von 90 ° verdreht.

### Beispiele:

Emulgator 1:20 Gew.-%ige Lösung eines p-Octylphenolethoxilates mit 25 mol Ethylenoxid
Emulgator 2:35 Gew.-%ige Lösung eines Natriumsalzes des sulfatierten p-Nonylphenolethoxilates mit 25 mol Ethylenoxid

### Beispiel 1

Der Versuch wird in einem 18 l Reaktor mit h/D=2,1 (Verhältnis Höhe/Durchmesser), versehen mit Blattrührer gemäß Fig. 1 und 35 UpM durchgeführt. Eine Vorlage bestehend aus 2200 g Wasser und 10 g Ascorbinsäure wird auf 80 °C erhitzt. Bei Erreichen von 70 °C Innentemperatur werden 200 g Natriumpersulfatlösung (2,5 gew.-%ig) zugegeben. Danach wird begonnen, den Zulauf der Monomeremulsion ME1 kontinuierlich in 210 min. und 1740 g Natriumpersulfatlösung in 240 min. zuzugeben, wobei man die Innentemperatur auf 85 °C ansteigen läßt. Nach vollständiger Zugabe wird 2h bei 85 °C gehalten, abgekühlt, mit Ammoniak-Lösung neutralisiert und über ein 250 µm Filter filtriert. Nach Abfiltrieren von ca. 3 g Koagulat wird eine Dispersion mit einem Feststoffanteil von 55,3 Gew.-%, einem pH von 7,5, einem LD-Wert von 58% (LD = Lichtdurchlässigkeit in %, 25 mm Schichtdicke, 0,01 gew.-%ig), einer Viskosität von 85 mPas und einem Feinkoagulatanteil von 0,007 % erhalten. Die Teilchengrößenverteilung ist polymodal.

### Zusammensetzung von ME1:

- 1900 g: Wasser
- 970 g: Emulgator 1
- 700 g: Emulgator 2
- 194 g: Acrylsäure
- 1160 g: Acrylnitril
- 8315 g: Butylacrylat

### Beispiel 2:

Beispiel 1 wird in einem 18 l Reaktor gleicher Bauart (gleiches Verhältnis Höhe/Durchmesser und gleicher Kühlmantel) mit einem 2-stufigen Rührer mit Rührblättern gemäß Fig. 6, wobei die Arme wie in Fig. 6b einen Winkel von 90 ° bilden, wiederholt. Die Rührerdrehzahl wird auf 40 UpM gesteigert. Dabei kann die Zulaufszeit der Monomeremulsion auf 180 min reduziert werden; die Initiatorlösung wird 30 min länger zugefahren. Danach wird wie bei Beispiel 1 verfahren. Es wird eine koagulatfreie Dispersion mit einem Feststoffanteil von 55,6 Gew.%, einem pH von 7,6, einem LD-Wert von 56 %, einer Viskosität von 80 mPas und einem Feinkoagulatantiel von 0,001 % erhalten. Die Teilchengrößenverteilung ist polymodal. Es findet sich kein Wandbelag.

### Stand der Technik:

[1] CAV (1995), Seite 48
[2] Firmenschrift MUHR; Verstellbare Rührblätter
[3] DE 36 22 723
[4] DE 44 21 494
[5] US 4 552 461
[6] H. Gerstenberger et al., Chem.-Ing. Techn. 54 (1982), S. 541-553

## Patentansprüche

1. Rührer für Reaktoren für chemische Umsetzungen, welcher an einer Antriebswelle (2) mehrere variabel einstellbare Rührorgane (5a-d) aufweist, dadurch gekennzeichnet, daß jedes Rührorgan (5a-d) mit der Antriebswelle (2) über einen Arm (4a-d) verbunden und über in der Antriebswelle (2) angeordnete Stellmittel (6) einstellbar ist.

2. Rührer nach Anspruch 1, dadurch gekennzeichnet, daß die Antriebswelle (2) als Hohlwelle ausgebildet ist und die Stellmittel (6) über eine im Inneren der Antriebswelle (2) verlaufende Steuerwelle (1) betätigbar sind.

3. Rührer nach Anspruch 1, dadurch gekennzeichnet, daß die Stellmittel (6) elektrisch, hydraulisch oder über Funk betätigbar sind.

4. Rührer nach einem der vorhergehenden Ansprüche, dadurch gekennzeichnet, daß es sich bei den Stellmitteln (6) um ein Getriebe handelt.

5. Rührer nach Anspruch 4, dadurch gekennzeichnet, daß das Getriebe (6) gekapselt ist.

6. Rührer nach einem der vorhergehenden Ansprüche, dadurch gekennzeichnet, daß je zwei Arme (4a,b bzw. 4c,d) koaxial an der Antriebswelle (2) angeordnet sind und ein Armpaar (4a,b bzw. 4c,d) bilden.

7. Rührer nach Anspruch 6, dadurch gekennzeichnet, daß zwei bis vier Armpaare (4a,b bzw. 4c,d) in verschiedenen Ebenen an der Antriebswelle (2) angeordnet sind.

8. Rührer nach einem der Ansprüche 6 oder 7, dadurch gekennzeichnet, daß mindestens eines der Armpaare (4a,b bzw 4c,d) einstückig ausgebildet ist.

9. Verwendung eines Rührers nach einem der vorhergehenden Ansprüche zur Herstellung von Polymerisaten, insbesondere von Emulsions-, Suspensions-, Lösungs-, Substanz- oder Fällungspolymerisaten.
